# EUROPEAN PATENT APPLICATION

(11) **EP 3 285 429 A1**
(43) Date of publication of application: **21.02.2018**
(21) Application number: 16184350.3
(22) Date of filing: 16.08.2016
(51) Int. Cl.: H04L 9/06, H04L 9/08

(54) **METHOD FOR SECURELY TRANSMITTING DIGITAL DATA**

(71) Applicant: Starossek, Uwe, 21075 Hamburg (DE)
(72) Inventor: Starossek, Uwe, 21075 Hamburg (DE)
(74) Representative: Hauck Patentanwaltspartnerschaft mbB

(57) **Abstract**

The invention pertains to a method for securely transmitting digital data by encryption and decryption. The invention also pertains to a computer program product adapted for carrying out the computer implemented method, a computer comprising a computer program product adapted for carrying out the computer implemented method and a system of a sending computer and a receiving computer adapted for carrying out the computer implemented method.

## Description

The invention pertains to a method for securely transmitting digital data by encryption and decryption. The invention also pertains to a computer program product adapted for carrying out the computer implemented method, a computer comprising a computer program product adapted for carrying out the computer implemented method and a system of a sending computer and a receiving computer adapted for carrying out the computer implemented method.

In cryptography, a cipher is an algorithm for performing encryption and decryption with the purpose of securely transmitting data. Regarding information technology, the only theoretically secure and potentially unbreakable cipher is the One Time Pad (OTP) cipher as first described in US 1,310,719. It is simple to implement. Assuming the plaintext is a series of bits, it works as follows: A fresh OTP consisting of random series of bits that is at least as long as the plaintext is generated as a key. The plaintext is XORed with the key to create the ciphertext, meaning that each bit of the ciphertext is produced by an exclusive-or (XOR) logical operation applied to the corresponding two bits of plaintext and key. To decrypt the ciphertext, it is XORed with the same key. Because the same key is used for encryption and decryption, OTP is called a symmetric-key cipher. OTP encryption and decryption of data in bit format is usually performed by a computer.

Plaintext encrypted using OTP cannot be retrieved without the encrypting key. However, there are some conditions that must be met to not compromise the cipher. The practically most problematic one of these conditions is that the key must be transmitted to the receiver, but must not fall in the hands of a potential code breaker (in the following called attacker). This points to a fundamental weakness of the OTP cipher in that one must be able to securely transmit large amounts of data, that is, the key, to the receiver of the message.

When using other symmetric-key ciphers, such as the Advanced Encryption Standard (AES, NIST 2001), the problem of securely transmitting the symmetric-key cipher session key is often solved by using an asymmetric-key cipher, such as the Rivest Shamir Adleman (RSA) cipher, for key transfer.

In an asymmetric-key cipher, the public key of the receiver, which can be known to everyone, is used for encrypting messages and the private key of the receiver, which is known only to him, for decrypting messages. Public and private keys are mathematically related. While the public key can easily be computed from the private key, computation of the private key from the public key is possible in principle but requires an impractical amount of computational resources and time.

In RSA, the size of the public key is currently 1024 to 4096 bits. The size of the plaintext message must be smaller than the size of the key. Furthermore, randomized padding must be added to the message before encrypting it for ensuring security. This leaves the maximum RSA message size to be 117 bytes when the RSA key size is 1024 bits (128 bytes). This is sufficient for transmitting the key of a symmetric-key cipher, such as AES with key sizes of 128 or 256 bits (16 or 32 bytes). However, it is insufficient for transmitting the key of the OTP cipher given that this key is as large as the message actually to be transmitted. Splitting the large OTP cipher key, or preferably the message itself, into 117-byte blocks and separately transmitting them with the RSA cipher is impractical because, compared to symmetric-key ciphers, this method is too slow.

The Limited Storage Model proposed by Maurer (U. Maurer (1992): Conditionally-perfect secrecy and a provably-secure randomized cipher. Journal of Cryptology, Vol. 5, Issue 1, Jan. 1992, pp. 53-66.), the Limited Access Model proposed by Rabin (M. O. Rabin (2005): Provably unbreakable hyper-encryption in the limited access model. IEEE Information Theory Workshop on Theory and Practice in Information-Theoretic Security, 2005, DOI 10.1109/ITWTPI.2005.1543953), and the Re-Randomizing Database concept proposed by Valiant (G. Valiant, P. Valiant (2016): Information theoretically secure databases. Electronic Colloquium on Computational Complexity, 2016, Report No. 78, arXiv:1605.02646) are based on the idea of publicly available random data.

The Limited Storage Model (Maurer) requires an expensive random data distribution system, which tends to make it impractical. Its security relies on the supposedly high cost of data storage, which considering the rapid decline of this cost does not seem to be a permanently protecting factor. The Limited Access Model (Rabin) requires a voluntary network of a large number of computers each maintaining and updating random pages and acting as page server nodes, which impairs its practicality. Its security relies on the random data downloaded from the page server nodes not all being intercepted by an attacker, which makes it vulnerable. The Re-Randomizing Database concept (Valiant) requires the secure exchange of one key for each transmitted bit of information, which makes it impractical. Its security relies on the users' communication with the database not being intercepted by an attacker, which makes it vulnerable.

The object of the invention is to provide a method for the secure transmission of digital data that largely exhibits the advantages of the OTP cipher, namely simplicity and information-theoretically security, and in which the key is easily and efficiently transmitted.

The invention solves this object by the computer implemented method according to claim 1. Advantageous embodiments can be found in the dependent claims and the specification.

The object is further solved by a computer program product adapted for carrying out the computer implemented method. The object is further solved by a computer comprising a computer program product adapted for carrying out the computer implemented method.

The object is further solved by a system of a sending computer and a receiving computer adapted for carrying out the computer implemented method.

The invention solves the object with a computer implemented method for securely transmitting digital data by encryption and decryption using a sending computer and a receiving computer, the method comprising the steps of:
- The sending computer encrypts a plaintext *P* to create a first ciphertext *C_{P}* by concatenating the plaintext *P* with at least one security key *S* via at least one first logical operation, wherein the at least one security key *S* is generated from at least one first generated key *K_{P}* and/or at least one first random key *R₁* and/or at least one second random key *R₂*,
- The sending computer transmits the first ciphertext *C_{P}* to a receiving computer,
- The receiving computer decrypts the first ciphertext *C_{P}* to recreate the plaintext *P* by concatenating the first ciphertext *C_{P}* with the at least one security key *S* via said at least one first logical operation,
- Wherein, if the security key S is generated from at least one first generated key *K_{P},* the sending computer generates the at least one first generated key *K_{P}* by selecting a number of first basic keys *Bᵢ, Bⱼ,* ..., *Bₘ*, *Bₙ* from a first set of basic keys *B_{P}* according to a first selection rule and concatenating said selected first basic keys *Bᵢ, Bⱼ, ..., Bₘ, Bₙ* via a first concatenating operation,
- wherein, if the security key *S* is generated from at least one first random key *R₁* and/or at least one second random key *R₂*, the sending computer generates at least one second generated key *K_{R}* by selecting a number of second basic keys *Bᵣ, Bₛ,* ..., *Bᵥ, B_{w}* from a second set of basic keys *B_{R}* according to a second selection rule and concatenating said selected second basic keys *Bᵣ, Bₛ,* ..., *Bᵥ, B_{w}* via a second concatenating operation, wherein the sending computer encrypts the at least one first random key *R₁* and/or the at least one second random key *R₂* to create a second ciphertext *C_{R}* by concatenating the at least one first random key *R₁* and/or the at least one second random key *R₂* with the at least one second generated key *K_{R}* via at least one second logical operation, wherein the sending computer transmits the second ciphertext *C_{R}* to the receiving computer, wherein the receiving computer decrypts the second ciphertext *C_{R}* by concatenating the second ciphertext *C_{R}* with the least one second generated key *K_{R}* to recreate the at least one first random key *R₁* and/or the at least one second random key *R₂*,
- wherein the at least one second random key *R₂*, if used, is generated from the at least one first random key *R₁* and/or the at least one first generated key *K_{P}* and/or the at least one second generated key *K_{R}* by applying a computation rule to said at least one first random key *R₁* and/or said at least one first generated key *K_{P}* and/or said at least one second generated key *K_{R}.*

According to the invention a plaintext *P* is encrypted by the sending computer in that the plaintext *P* is concatenated with at least one security key *S* via at least one first logical operation. As a result, a first ciphertext *C_{P}* is created. After encryption the sending computer transmits the first ciphertext *C_{P}* to the receiving computer. Transmission may be done by any number of ways, e.g. via a cable or wireless, over the internet or via a local network. The receiving computer decrypts the ciphertext *C_{P}* by concatenating the ciphertext *C_{P}* with the at least one security key *S* via the same at least one first logical operation. As a result, the receiving computer recreates the plaintext *P.* The encryption may be described by the following equation: *C_{P} = P* ⊕ S, wherein ⊕ denotes the first logical operation.

The plaintext *P* comprises the message that is supposed to be securely transmitted from the sender to the receiver. In regard to this application, "plaintext" may denote any type of information. The plaintext *P* may for example comprise a written letter or other type of written information, an audio file or a video file. The plaintext *P* may be a binary string. The first ciphertext *C_{P}* may be a binary string, in particular if plaintext *P* and the at least one security key *S* are also binary strings. The plaintext *P* may be of the same length or smaller than the at least one security key *S*, in particular both may be of length *s*. Thus, the plaintext *P* may be of length *l_{P}* ≤ *s.* If the plaintext *P* is shorter than the at least one security key *S,* in particular if the plaintext *P* is of a length *l_{P}* < *s,* the plaintext *P* may be prolonged with any characters until the plaintext *P* is as long as the at least one security key *S,* in particular until *l_{P}* = *s.* If the at least one security key S and the plaintext *P* are binary strings, the plaintext *P* may e.g. be prolonged by zeros. However, the at least one security key *S* may also be truncated to the length of the plaintext *P.* The first logical operation ⊕ may e.g. be a bitwise exclusive-or (XOR) operation or exclusive-nor (XNOR) operation, in which each bit of a resulting string is obtained from performing said XOR or XNOR operation on the respective pair of bits of the two strings the operation is performed on.

According to the invention the at least one security key *S* is generated from at least one first generated key *K_{P}* and/or at least one first random key *R₁* and/or at least one second random key *R₂*. When the security key is generated from only one key, the security key may be identical to this one key. When the security key is generated from more than one key, that is, *K_{P}* and/or *R₁* and/or *R₂*, the security key may be generated by concatenating the constituent keys, that is, *K_{P}* and/or *R₁* and/or *R₂*, via at least one logical operation, preferably the first logical operation.

According to the invention the at least one security key *S* may be generated at least from at least one first generated key *K_{P}.* If the security key *S* is generated from at least one first generated key *K_{P}*, the sending computer selects a number of first basic keys *Bᵢ, Bⱼ,* ..., *Bₘ*, *Bₙ* from a first set of basic keys *B_{P}* according to a first selection rule which may be defined by the sending computer. The basic keys are random and may be of length *s*. The set of basic keys may be defined as *B_{P}* := {*B₁, B₂,* ..., *Bₖ*} wherein the set *B_{P}* comprises the elements *B₁, B₂,* ..., *Bₖ* as *k* basic keys. Thus, a different index or serial number between 1 and *k* may be assigned to each basic key, wherein *k* may be 128 or 256, for example. The sending computer selects a subset of the set *B_{P}* of *k* basic keys. The subset to be selected has a size *g*, that is, it contains *g* basic keys *Bᵢ, Bⱼ,* ..., *Bₘ*, *Bₙ,* where *g* can be random in the range of 1 to *k* (1 ≤*g*≤ *k*)*.* The selection rule may be defined by the set of serial numbers or indices assigned to the selected basic keys. For example, if basic keys *Bₐ, B_{b},* and *B_{c}* are selected from the set *B_{P},* the selection rule may comprise the serial numbers or indices *a, b* and *c.* The selection rule may be of much smaller size than the first key, that is, the selection rule may be of a length *lₛ* << *s.* The basic keys may be binary strings. The number *g* of selected basic keys can also be fixed to a certain value or it can be random within a certain range limited by minimum and maximum values (*g*ₘᵢₙ ≤ *g* ≤ *g*ₘₐₓ ). The chosen range of *g* will in general depend on the necessary level of security. In particular, a fixed number of four basic keys *g* = 4, or six basic keys *g* = 6 or eight basic keys *g* = 8 may be selected. For maximum security, linear independency between the basic keys should be largely ensured. They are linearly independent if none of them can be obtained by any of the logical operations used on any number of the other basic keys. This condition should be largely fulfilled provided the basic keys are generated in a random process.

If the security key *S* is generated from at least one first generated key *K_{P}*, the sending computer generates the at least one first generated key *K_{P}* by concatenating said selected first basic keys *Bᵢ, Bⱼ,* ..., *Bₘ*, *Bₙ* via a first concatenating operation. The selected first basic keys *Bᵢ, Bⱼ,* ..., *Bₘ*, *Bₙ* may be concatenated according to the following equation: *K_{P} = Bᵢ* ⊕ *Bⱼ* ⊕ ... ⊕ *Bₘ* ⊕ *Bₙ,* wherein ⊕ denotes the first concatenating operation. The at least one first generated key *K_{P}* may be a binary string, in particular, if the basic keys are also binary strings. The first concatenating operation ⊕ may e.g. be a bitwise exclusive-or (XOR) operation or a bitwise exclusive-nor (XNOR) operation. The sending computer may thus generate the at least one first generated key *K_{P}* by performing a concatenated XOR or XNOR operation on the selected first basic keys *Bᵢ, Bⱼ,* ..., *Bₘ*, *Bₙ.* That is, the first selected basic key is XORed or XNORed with the second selected basic key, the result is XORed or XNORed with the third selected basic key and so on until the result of the penultimate XOR or XNOR operation is XORed or XNORed with the *g*^{th} selected basic key. Because XOR and XNOR operations are commutative, the order of the individual operations in concatenated XOR and XNOR operations can be changed without changing the result.

If the security key *S* is generated from the at least one first generated key *K_{P}*, the sending computer encrypts the plaintext *P* by concatenating it with the at least one first generated key *K_{P}*, which may be described by the following equation: *C_{P}* = *P* ⊕ *K_{P}.*

If the security key *S* is generated from the at least one first generated key *K_{P}*, the receiving computer decrypts said first ciphertext *Cp* by concatenating said first ciphertext *Cp* and said first key *K_{P}* via the first logical operation. The decryption may be described by the following equation: *P* = *C_{P}* ⊕ *K_{P}*, wherein ⊕ denotes the first logical operation. Information on how to acquire the at least one first generated key *K_{P}* may be known to the receiving computer or it may be transmitted to it. In particular, the sending computer may transmit the first selection rule to the receiving computer. Thus, for decryption the receiving computer uses the same logical operation as the sending computer has used for encryption. In this way the receiving computer reverses the encryption step done by the sending computer and decrypts the first ciphertext *Cp* thereby receiving the plaintext *P.*

The above method is secure against ciphertext-only attacks. Vetting a new cipher includes testing of large quantities of ciphertext for any statistical departure from random noise. Assuming perfectly random basic keys, the first key *K_{P}* generated from a randomly selected subset of basic keys will also be perfectly random. When adequate logical operations are applied to the plaintext and such a randomly generated basic key, the resulting ciphertext *C_{P}* also is random. The same first key *K_{P}* should not be used twice to not compromise security. This is ensured with a high degree of probability by randomly choosing the basic keys provided *k* is large enough. Another ciphertext-only attack is called exhaustive key search or brute-force attack, in which all possible keys are tried and the result of each decryption attempt is checked as to whether it is a valid plaintext. As shown below, the size of the private key space can easily be made large enough so that a brute-force attack will not succeed.

However, above method may be vulnerable to a known-plaintext attack. A known-plaintext attack can be executed if the attacker knows the first ciphertext *C_{P}* and a part of the plaintext *P.* It is assumed that *r* bits of plaintext *P* are known. When the first logical operation is applied to these *r* bits of plaintext *P* and the corresponding bits of the first ciphertext *C_{P}* the corresponding bits of the first key *K_{P}* result. Based on this information, it can be attempted to identify the subset of *g* selected first basic keys, and thus the complete first key *K_{P}*, for retrieving the remaining plaintext *P.* When *r* = *k,* this is an easy task because then a well-defined system of equations results that can be solved with Gauss's algorithm. Known plaintext of such a size is possible. In image or audio data, it can appear as long series of zeros. In such a case, the basic design of the cipher described above may not be secure against a known-plaintext attack. Therefore, a first random key *R₁* and/or a second random key *R₂* according to the invention are proposed as described in the following.

If the security key *S* is generated at least from at least one first random key *R₁,* said at least one first random key *R₁* may be generated by the sending computer as a true or pseudo random number. Pseudo randomness can be sufficient depending on the kind of plaintext and the period of the pseudo random number sequence. The at least one first random key *R₁* may be of length *s* and may be a binary string. The at least one first random key *R₁* may be generated as randomly as possible.

Said random key *R₁* may be encrypted by the sending computer generally in the same way the plaintext *P* is encrypted as described above. In particular, *g* second basic keys *Bᵣ, Bₛ,* ..., *Bᵥ, B_{w}* are selected from a second set of basic keys *B_{R}* according to a second selection rule. The same statements apply for the number *g* of selected basic keys as before, but *g* can have a different value now. The first set of basic keys *B_{P}* used for selecting the first basic keys and the second set of basic keys *B_{R}* used for selecting the second basic keys may be the same set of basic keys *B*. From the selected basic keys *Bᵣ, Bₛ,* ..., *Bᵥ, B_{w}* the sending computer generates at least one second generated key *K_{R}* via a second concatenating operation which concatenates the second basic keys with one another. In particular, this may be described by the following equation: *K_{R} = Bᵣ* ⊕ *Bₛ* ⊕ ... ⊕ *Bᵥ* ⊕ *B_{w}*, wherein ⊕ denotes the second concatenating operation.

Encryption of *R₁* is done by concatenating the at least one first random key *R₁* with said at least one second key *K_{R}* via a second logical operation thereby creating a second ciphertext *C_{R}*. This encryption may be described by the equation *C_{R}* = *R₁* ⊕ *K_{R}.* The first and second logical operations may be the same or a different operation, in particular, a bitwise exclusive-or (XOR) operation or a bitwise exclusive-nor (XNOR) operation. Also, the first and second logical operations may be the same or different operations than the first and second concatenating operations. In particular all the logical operations and all the concatenating operations may be bitwise exclusive-or (XOR) operation or bitwise exclusive-nor (XNOR) operation.

If the security key *S* is generated at least from at least one first random key *R₁,* the sending computer encrypts the plaintext *P* by concatenating it with the at least one first random key *R₁,* which may be described by the following equation: *C_{P}* = *P* ⊕ *R₁.* If the security key *S* is generated from at least one first generated key *K_{P}* and at least one first random key *R₁,* the sending computer includes the at least one first random key *R₁* in the encryption of the plaintext *P.* In particular, the sending computer encrypts the plaintext *P* by concatenating it via the first logical operation with the first key *K_{P}* and the at least one first random key *R₁* to create the first ciphertext *C_{P}*, which may be described by the following equation: *C_{P}=P*⊕*K_{P}*⊕*R₁*·

After encryption of *R₁* said second ciphertext *C_{R}* is transmitted to the receiving computer together with the first ciphertext *C_{P}* or separately from it.

The receiving computer decrypts the second ciphertext *C_{R}* with the at least one second generated key *K_{R}* to recreate the at least one first random key *R₁* by concatenating the second ciphertext *C_{R}* with the at least one second generated key *K_{R}* via the at least one second logical operation. This may be described by the following equation: *R₁* = *C_{R}* ⊕ *K_{R}.* Information on how to generate the at least one second generated key *K_{R}* may be known to the receiving computer or it may be transmitted to it. If the security key *S* is generated from at least one first random key *R₁,* the receiving computer decrypts the first ciphertext *C_{P}* by concatenating said first ciphertext *C_{P}* and said first random key *R₁* via the first logical operation. The decryption of the first ciphertext *C_{P}* may be described by the following equation: *P* = *C_{P}* ⊕ *R₁,* wherein ⊕ denotes the first logical operation. If the security key *S* is generated from at least one first generated key *K_{P}* and at least one first random key *R₁,* the receiving computer decrypts the first ciphertext *C_{P}* by concatenating it with the at least one first key *K_{P}* and the at least one first random key *R₁* via the first logical operation. The decryption of the first ciphertext *C_{P}* may then be described by the following equation: *P* = *C_{P}* ⊕ *K_{P}* ⊕ *R₁,* wherein ⊕ denotes the first logical operation. Information on how to generate the at least one first generated key *K_{P}* may be known to the receiving computer or it may be transmitted to it. Thus, for decryption the receiving computer uses the same logical operation as the sending computer has used for encryption. In this way the receiving computer reverses the encryption step done by the sending computer and decrypts the first ciphertext *C_{P}* thereby receiving the plaintext *P*.

However, above method may still be vulnerable to a known-plaintext attack even if the security key *S* is generated from at least one first generated key *K_{P}* and at least one first random key *R₁.* If the attacker intercepts the transmitted first ciphertext *C_{P}* and second ciphertext *C_{R}* and applies the correct logical operation to both ciphertexts, the at least one first random key *R₁* cancels: *C_{P}* ⊕ *C_{R}* = (*P* ⊕ *K_{P}* ⊕ *R₁*) ⊕ (*R₁* ⊕ *K_{R}*) = *P* ⊕ *K_{P}* ⊕ *K_{R}.* If the attacker knows part of the plaintext *P*, he could identify the combined key (*K_{P}* ⊕ *K_{R}*)*,* then possibly also the first key *K_{P}* so he can decrypt the plaintext *P*. Therefore, a second random key *R₂* may be used according to the invention as will be explained in the following.

According to the invention the at least one security key S may also be generated at least from at least one second random key *R₂*. The at least one second random key *R₂* can be derived from the at least one first random key *R₁.* Alternatively or in addition it may also be derived from the at least one first generated key *K_{P}* and/or the at least one second generated key *K_{R}.* In particular, the sending computer generates the at least one second random key *R₂* by applying a computation rule to said at least one first random key *R₁* and/or the at least one first generated key *K_{P}* and/or the at least one second generated key *K_{R}.* For example with regard to *R₁* the computation rule should be such that both *R₂* and *R₁* ⊕ *R₂* are as random as *R₁* and different from *R₁.* The computation rule does not need to be invertible for all variations of the invention. For some variations of the invention, described below, it must not be invertible. Various computation rules are possible. For example, the computation rule can be a rule of transposition. A rule of transposition, for example, can be as follows. The first bit of *R₂* is set to the second bit of *R₁,* the second bit of *R₂* is set to the third bit of *R₁,* and so on until the penultimate bit of *R₂* of is set to the last bit of *R₁,* and then the last bit of *R₂* is set to the first bit of *R₁.* That is, all bits of *R₁* are shifted one position up and the first bit of *R₁* is moved to the end. Variations of this procedure are obtained by defining different relationships between the position of a respective bit of *R₂* and the position of the bit of *R₁* to which the respective bit of *R₂* is set. As a second example, the computation rule can be a rule of transposition defined as follows: If the first bit of the first key *K_{P}* is zero, the first bit of *R₂* is set to the second bit of *R₁*; otherwise, it is set to the third bit of *R₁*; if the second bit of *K_{P}* is zero, the second bit of *R₂* is set to the third bit of *R₁*; otherwise, it is set to the fourth bit of *R₁*; and so on until the penultimate bit of *R₂* is set to the last or first bit of *R₁* depending on whether the penultimate bit of *K_{P}* is zero or one, and the last bit of *R₂* is set to the first or second bit of *R₁* depending on whether the last bit of *K_{P}* is zero or one. Variations of this procedure are obtained by replacing *K_{P}* by *K_{R}* or some combination of *K_{P}* and *K_{R},* by exchanging *R₁, K_{P},* and *K_{R}* within such procedures, or by defining different relationships between the position of a respective bit of *R₂* and the positions of the bits of *R₁, K_{P},* and *K_{R}* from which the respective bit of *R₂* results.

If the security key *S* is generated from at least one second random key *R₂*, the sending computer encrypts the plaintext *P* by concatenating it via a first logical operation with the second random key *R₂* to create the first ciphertext *C_{P}.* The encryption may be described by the following equation: *C_{P}* = *P* ⊕ *R₂*, wherein ⊕ denotes the first logical operation. If the security key *S* is generated from at least one first generated key *K_{P}* and at least one second random key *R₂,* the sending computer includes the at least one second random key *R₂* in the encryption of the plaintext *P*. In particular, the sending computer encrypts the plaintext *P* by concatenating it via the first logical operation with the at least one first generated key *K_{P}* and with the at least one second random key *R₂* to create the first ciphertext *C_{P}*, which may be described by the following equation: *C_{P}* = *P* ⊕ *K_{P}* ⊕ *R₂*. After encryption the sending computer transmits the first ciphertext *C_{P}* to the receiving computer.

The sending computer further generates the at least one second generated key *K_{R}* as explained above.

The sending computer encrypts the at least one first random key *R₁* or the at least one second random key *R₂* or the combined random keys (*R₁* ⊕ *R₂*) with the at least one second generated key *K_{R}* to create a second ciphertext *C_{R}* by concatenating the at least one second generated key *K_{R}* with the at least one first random key *R₁* or the at least one second random key *R₂* or to the combined random keys via at least one second logical operation. If the sending computer concatenates the at least one first random key *R₁* with the at least one second generated key *K_{R},* the encryption may be described by the following equation: *C_{R}* = *R₁* ⊕ *K_{R}.* If the sending computer concatenates the at least one second random key *R₂* with the at least one second generated key *K_{R},* the encryption may be described by the following equation: *C_{R}* = *R₂* ⊕ *K_{R}.* If the sending computer concatenates the at least one first random key *R₁* and the at least one second random key *R₂* with the at least one second generated key *K_{R},* the encryption may be described by the following equation: *C_{R} = R₁* ⊕ *R₂* ⊕ *K_{R}.*

The sending computer then transmits the second ciphertext *C_{R}* to the receiving computer, wherein the receiving computer decrypts the second ciphertext *C_{R}* with the at least one second generated key *K_{R}* to recreate the at least one first random key *R₁* or the at least one second random key *R₂* or the combined random keys (*R₁* ⊕ *R₂*) by applying the at least one second logical operation to the second ciphertext *C_{R}*. If the second ciphertext *C_{R}* was created by concatenating the at least one first random key *R₁* with the at least one second generated key *K_{R},* the decryption may be described by the following equation: *R₁* = *C_{R}* ⊕ *K_{R}.* If the second ciphertext *C_{R}* was created by concatenating the at least one second random key *R₂* with the at least one second generated key *K_{R},* the decryption may be described by the following equation: *R₂* = *C_{R}* ⊕ *K_{R}.* If the second ciphertext *C_{R}* was created by concatenating the at least one first random key *R₁* with the at least one second random key *R₂* and the at least one second generated key *K_{R},* the decryption may be described by the following equation: *R₁* ⊕ *R₂ = C_{R}* ⊕ *K_{R}.* In this case, *R₁* may have to be determined from *R₁* ⊕ *R₂.* The computation rule has then to be such that this is possible. When the first of the two computation rules described above has been used for generating *R₂*, the first bit of the string to be calculated would have to be set to 0 or 1 leading to a string that could be either *R₁* or ¬*R₁* (where ¬ denotes an operator that flips all bits of the string it precedes). Both possibilities would have to be checked as to whether they lead to a valid plaintext.

If the first ciphertext *C_{P}* and the second ciphertext *C_{R}* have been created by concatenating different random keys *R₁, R₂*, the receiving computer recreates the second random key *R₂* from the first random key *R₁* via the respective computation rule or the first random key *R₁* from the second random key *R₂*, in which case the computation rule must be invertible. The computation rule may be known to the receiving computer or the receiver or it may be transmitted to them. The computation rule may be transmitted in a non-encrypted or encrypted manner. However, the computation rule may also be publicly known.

If the security key *S* is generated from at least one second random key *R₂*, the plaintext *P* is recreated by the receiving computer via the first logical operation by concatenating the at least one second random key *R₂* and the transmitted first ciphertext *C_{P}* which may be described by the following equation: *P* = *C_{P}* ⊕ *R₂.* If the security key *S* is generated from at least one second random key *R₂* and at least one first generated key *K_{P}*, the plaintext *P* is recreated via the first logical operation by concatenating the at least one second random key *R₂* and the at least on first generated key *K_{P}* with the transmitted first ciphertext *C_{P}.* This may be described by the following equation: *P* = *C_{P}* ⊕ *K_{P}* ⊕ *R₂.* Provided the equation for generating the second ciphertext *C_{R}* is properly chosen, this method is particularly secure, especially against known-plaintext attacks, because one or both of the random keys is always present even if the first ciphertext *C_{P}* and the second ciphertext *C_{R}* are concatenated by an adequate logical operation. For example, the second ciphertext *C_{R}* may be: *C_{R}* = *R₁* ⊕ *K_{R}.* As a result, the first random key *R₁* is retrieved by the receiving computer as mentioned above: *R₁* = *C_{R}* ⊕ *K_{R}.* The plaintext is retrieved by the receiving computer as mentioned above: *P* = *C_{P}* ⊕ *K_{P}* ⊕ *R₂.* And the corresponding first ciphertext *C_{P}* is as mentioned above: *C_{P}* = *P* ⊕ *K_{P}* ⊕ *R₂.* If the adequate logical operation is applied to the first ciphertext *C_{P}* and the second ciphertext *C_{R}* the result may be described by the following equation: *C_{P}* ⊕ *C_{R}* = (*P* ⊕ *K_{P}* ⊕ *R₂*) ⊕ (*R₁* ⊕ *K_{R}*) = *P* ⊕ *K_{P}* ⊕ *K_{R}* ⊕ *R₁* ⊕ *R₂.* In this case, both *R₁* and *R₂* remain present in the result. Because of the initial requirement that the computation rule is such that *R₁* ⊕ *R₂* is as random as *R₁,* an attacker cannot deduce any information on the first and second keys *K_{P}* and *K_{R}* even if *P* is partly or fully known or guessed. Hence, this embodiment is secure against known-plaintext attacks.

According to the invention, if the first ciphertext *C_{P}* and/or the second ciphertext *C_{R}* is created by concatenating the at least one second random key *R₂*, the at least one second random key *R₂* is generated from the at least one first random key *R₁* and/or the at least one first generated key *K_{P}* and/or the at least one second generated key *K_{R}* by applying a computation rule to said at least one first random key *R₁* and/or said at least one first generated key *K_{P}* and/or said at least one second generated key *K_{R}.* Of course, the step of generating *R₂* is only carried out according to the invention if *R₂* is required for the method according to the invention, in particular, if *R₂* is used in the creation of *C_{P}* and/or *C_{R}*. The at least one second random key *R₂* may be generated by the sending computer and regenerated by the receiving computer.

In all the variations of the invention at least one key *K_{P}* and/or *K_{R}* is generated and used for encryption of the plaintext *P* itself, for encryption of a random key *R₁* and/or *R₂* which encrypts the plaintext *P* or encryption of both the plaintext *P* and the random key *R₁* and/or *R₂*. The encrypted plaintext *P,* which is the ciphertext *C_{P}*, and possibly the encrypted random key *R₁* and/or *R₂*, which is the ciphertext *C_{R},* is transmitted to a receiver. The keys *K_{P}* and/or *K_{R}* themselves, however, do not need to be transmitted to the receiver. Instead, only the first and/or second selection rule has to be transmitted to the receiver. The selection rules may comprise much less information than the generated keys *K_{P}* and/or *K_{R},* namely the information about the selected basic keys used for generating *K_{P}* and/or *K_{R}.* Therefore, the selection rules may be of much smaller size than *K_{P}* and/or *K_{R},* which in general may be as large as the plaintext *P.* From the selection rules the keys *K_{P}* and/or *K_{R}* may be (re-)generated by the receiver, because the receiver has access to the same set of basic keys *B_{P}* and/or *B_{R}*. Thus, the first ciphertext *C_{P}* and/or the second ciphertext *C_{R}* can be decrypted by the receiver to recreate the plaintext *P.* This allows taking advantage of a secure key, like an OTP, while still being able to securely and efficiently transmit not the key itself, but information on how to recreate the key. Therefore, the fundamental weakness of the OTP is overcome: the necessity of securely exchanging a key that is as long as the message. Also, due to the fact that the selection rule may be much shorter than the plaintext, and the first and/or second generated key does not need to be transmitted, the invention allows for securely transmitting large amounts of data, such as audio or video files.

The cipher described above at least partly inherits the simplicity of the OTP cipher and can easily be implemented in computer software and hardware. Its advantage over the OTP cipher is that the information how to recreate the keys is much shorter. Its advantage over other processes that involve the OTP cipher is that the required random data is produced and handled more easily. A further advantage is that, once the first key *K_{P}* and/or second key *K_{R}* is generated and the first and/or second selection rule is transmitted or known to the receiver, the first ciphertext *C_{P}* and/or the second ciphertext *C_{R}* can continuously be generated by the sender and streamed to the receiver, who can continuously decrypt the data and produce the plaintext. That is, the receiver can begin to play the plaintext data, such as an audio or video file, before the entire plaintext message has been encrypted and transmitted by the sender.

In the following, two alternative methods for generating a set *B* of basic keys are described and the security of these basic keys is discussed. Both methods may be applied for generating the first set of basic keys *B_{P}* and/or the second set of basic keys *B_{R}*. As mentioned, the first set of basic keys *B_{P}* and the second set of basic keys *B_{R}* may be the same set. A set of basic keys *B* may be generated by the sending computer or any other computer. The set of basic keys *B* may be (pre-) generated once and then used for the selection of a number of basic keys every time the method according to the invention is executed. However it is also possible that the set of basic keys is generated every time the method according to the invention is executed so that the selection of a number of basic keys will always be done from a different set of basic keys. The set of basic keys may also be newly generated after a predefined or random number of executions of the method according to the invention. Preferably, the set of basic keys is random, in particular perfectly random. The set of basic keys *B* := {*B₁, B₂,* ..., *Bₖ*} is called library. The randomness of the generated data should be as high as possible and preferably perfect. Perfectly random data can be produced by physical random generators. The cost of ensuring perfect randomness is amortized quickly, if the library is intended for multiple use and needs to be generated and distributed only once or, at least, only once in a certain period of use. The basic keys may be publicly available.

In a first method of generating a set *B* of basic keys, the basic keys may be generated individually and independently from one another. In a second method, it is possible to derive said set of basic keys *B* from a master string *B₀* of length *l*, wherein a basic key *B_{q}* is identified by a pointer *q* in the range 1 *≤ q* ≤ *l* and *B_{q}* is defined as the substring of *B₀* that commences at position *q.* In this method, *l* different basic keys are available that together form the set of basic keys *B*, which in turn can be used as *B_{P}* or *B_{R}*. For the first subset of selected basic keys, the basic keys *Bᵢ, Bⱼ,* ..., *Bₘ, Bₙ* are selected by selecting the substrings identified by the respective pointers *i, j,* ..., *m, n* and for the second subset of basic keys the basic keys *Bᵣ, Bₛ, ..., Bᵥ, B_{w}* are selected by selecting the substrings of the respective pointers *r, s,* ..., *v*, *w*. The selected basic keys are taken as substrings of a master string *B₀* of length *l*, with *l* ≥ *s,* wherein *s* is the length of the basic keys. Master string *B*₀ may be random and available to both the sender and the receiver, possibly public, and intended for multiple uses. A basic key *B_{q}* is identified by a pointer *q* in the range 1 *≤ q ≤ l. B_{q}* is taken as the substring of *B*₀ that commences at position *q*. When the remaining length of *B*₀ is shorter than the length of *B_{q},* that is, when the sum of *q* and *s* is larger than *l*, the remaining final substring of *B_{q}* is taken as the respective initial substring of *B*₀. This is equivalent to appending a copy of *B*₀ to itself or to connecting the last position of *B*₀ to its first position thus creating a looped string. They are numbered consecutively from 1 to *l*, where the number that identifies an individual basic key *B_{q}* is the value of *q* that indicates the position in *B₀* of the first bit of *B_{q}.* Like the individually generated basic keys, master string *B*₀ is preferably random, in particular perfectly random, and is intended for single or multiple uses. It is available to both the sender and the receiver, and possibly public.

Security against brute-force attacks, that is, an exhaustive key search, is considered separately for the two methods of generating the set of basic keys *B* described above. If the basic keys are generated by the above explained first method and *g* is random *with g* ≤ *k,* the key space of the first key *K_{P}* and second key *K_{R}* each amounts to a size of 2^{k}. Assuming that the number of basic keys is *k* = 256, the number of different possible first keys *K_{P}* or second keys *K_{R}* would be 2²⁵⁶. This is much larger than 2¹²⁸, the key space size that, based on a physical argument and the Landauer limit, is considered computationally secure if the keys are used in a symmetric-key cipher. If the basic keys are generated by the above explained second method, the size of the key space is different. For instance, when the length of the master string is *l* = 2³²*,* corresponding to a size of the master string of 512 MB, and *g* is set to *g* = 4 (instead of being random with g < *l*), the number of possible first keys *K_{P}* or second keys K_{R} is almost (2³²)⁴ = 2¹²⁸ which is computationally secure. In summary, the first ciphertext *C_{P}* is secure against a brute-force attack provided parameter *k* or *l* on the one side and parameter *g* on the other are properly chosen. Care must be taken that the choice of the subset of selected basic keys defining a first generated key *K_{P}* or second generated key *K_{R}* is random, so that each subset within the limits selected for *g* has the same chance of being chosen. When using both the first and second generated keys *K_{P}* and *K_{R},* however, two keys must actually be found. Using the same parameters, the combined key space size then is (2²⁵⁶)² = 2⁵¹² in the first method and (2¹²⁸)² = 2²⁵⁶ in the second method. Hence *k* could be reduced to *k* = 128 or smaller in the first method (at the same time keeping *g* random with *g* ≤ *k*) and *g* could be reduced to *g* = 2 in the second method.

The parameters *s, k* or *l*, and *g* should be chosen such that the speed of data transfer and the computational hardware requirements are reasonably balanced. Furthermore, the parameters *k* or *l*, and *g* should be chosen such that a brute-force attack will fail. If the basic keys are generated by the above explained first method, the *k* basic keys must be permanently stored by sender and receiver. The corresponding data volume is *k* · *s.* For the computational hardware available today, a reasonable choice of *s* could be in the range of 2²³ to 2³⁰ (corresponding to 1 MB to 128 MB), depending on the sort of data to be transferred. If *k* = 256, for example, the respective data volume to be stored would be 256 MB to 32 GB. If the basic keys are generated by the second method, only the master string must be stored by sender and receiver. If the size of the master string is chosen to be *l* = 2³², for example, the respective data volume to be permanently stored would be 512 MB. This volume is independent of *s,* which could be as large as *l*.

The computational effort in evaluating the first key *K_{P}* depends on the size *s* of the basic keys and on the number *g* of basic keys chosen to generate the first key *K_{P}.* If the basic keys are generated by the first method, *g* is generally in the range of 1 to *k.* However, it can be advantageous to limit *g* to minimum and maximum values, *g*ₘᵢₙ and *g*ₘₐₓ, so that *g*ₘᵢₙ ≤ *g* ≤ *g*ₘₐₓ. Choosing a maximum value *g*ₘₐₓ that is smaller than *k* has the advantage of reducing the effort required for computing the keys *K_{P}* and *K_{R}.* At the same time, this would reduce the size of the key space and hence the security against brute-force attack. When the number of basic keys is *k* = 256 and *g* is set to *g* = 32, for instance, the number of different keys *K_{P}* is *b*(256|32) ≈ 1,336 · 2¹³⁵, where *b*(*k*|*g*) is the binomial coefficient indexed by *k* and *g*. This is larger than 2¹²⁸, the key space size considered computationally secure (see above). Hence allowing *g* to be in the range 0 ≤ *g* ≤ 32 would also be computationally secure. In the latter case, the average computational effort in generating *K_{P}* or *K_{R}* would be reduced by a factor of 8 compared to allowing the maximum possible range of 1 ≤ *g* < 256.

If the basic keys are generated by the second method, *g* can be set to a comparatively small value as shown in the above discussion of brute-force attack. The computational effort in generating *K_{P}* or *K_{R}* is correspondingly small.

According to the invention the at least one security key *S* may be generated from at least one first random key *R₁* and at least one second random key *R₂* and at least one first generated key *K_{P}*. In this case, the plaintext *P* may be encrypted via the first logical operation ⊕ by the at least one first random key *R₁* and the at least one second random key *R₂* and the at least one first generated key *K_{P}* to create the first ciphertext *C_{P}.* This may be described by the equation: *C_{P}* = *P* ⊕ *K_{P}* ⊕ *R₁* ⊕ *R₂*. The second ciphertext *C_{R}* may then e.g. be described by the following equation: *C_{R}* = *R₁* ⊕ *K_{R}.* The first random key *R₁* is retrieved by the receiving computer as described by the following equation: *R₁* = *C_{R}* ⊕ *K_{R}.* The plaintext is retrieved by the receiving computer as described by the following equation: *P = Cp* ⊕ *K_{P}* ⊕ *R₁* ⊕ *R₂.* This embodiment of the inventive method is particularly secure to a known-plaintext attack, because even if an attacker knows both the first ciphertext *Cp* and the second ciphertext *C_{R}*, he cannot fully recreate the plaintext *P.* If the correct logical operation is applied to the first and second ciphertexts the following equation results: *Cp* ⊕ *C_{R}* = *(P* ⊕ *K_{P}* ⊕ *R₁* ⊕ *R₂*) ⊕ (*R₁* ⊕ *K_{R}*) = *P* ⊕ *K_{P}* ⊕ *K_{R}* ⊕ *R₂.* Although *R₁* has been canceled out, *R₂* is still present in the result. Thus, even if *P* is partly or fully known, for instance, if *P* is assumed to be a zero string, no information on the first and second keys *K_{P}* and *K_{R}* can be deduced from this operation, because these keys are still randomized by the presence of *R₂*, which is unknown to the attacker. Hence this embodiment is secure against a known-plaintext attack.

According to the invention the plaintext *P* may be concatenated with any combination of the three different keys: the first generated key *K_{P}*, the first random key *R₁* and the second random key *R₂* thereby creating the first ciphertext *Cp,* which corresponds to 7 different rules for generating *C_{P}.* The second ciphertext *C_{R}* may be created by concatenating the second generated key *K_{R}* with the first random key *R₁* or with the second random key *R₂* or with both the first random key *R₁* and the second random key *R₂*, which corresponds to 3 different rules for generating *C_{R}*. This leads to 21 different combinations of rules for generating the ciphertexts *C_{P}* and *C_{R}* which not all, however, might be feasible and secure.

According to a preferred embodiment, if the security key S is generated from at least one first generated key *K_{P},* the receiving computer applies said first selection rule to said first set of basic keys *B_{P}* to select the first basic keys *Bᵢ, Bⱼ,* ..., *Bₘ*, *Bₙ* previously selected by the sending computer. Therefore, the receiving computer applies the first selection rule to the first set of basic keys *B_{P}* thereby selecting exactly the same basic keys *Bᵢ, Bⱼ,* ..., *Bₘ*, *Bₙ* that were previously selected by the sending computer. The selection rule is known to the receiver or the receiving computer. The selection rule may have been transmitted to the receiver/ receiving computer prior to the transmission of the encrypted message. For example, the selection rule may have been given to the receiver on a transportable storage medium. The selection rule may follow some pre-defined logic which is known to the receiver. Also, the receiver may have a whole set of selection rules for future use. The first set of basic keys *B_{P},* or master string *B₀* from which it can be generated, is also known to the receiving computer or the receiver. Said first set of basic keys *B_{P},* or master string *B₀,* may also have been given to the receiver/receiving computer prior to the transmission of the encrypted message via any number of ways. For example, the first set of basic keys *B_{P},* or *B₀,* may have been given to the receiver on a transportable storage medium. Also, the first set of basic keys *B_{P},* or *B₀,* may be publicly available. The first set of basic keys *B_{P},* or *B₀,* can be intended for general use thus serving for the exchange of messages between arbitrary parties. As the first set of basic keys *B_{P},* or *B₀,* may be used numerous times, combined according to different selection rules, the first set of basic keys *B_{P}* could be regarded as Multiple Time Pads (MTP). The receiving computer then generates the at least one first generated key *K_{P}* by concatenating it with the selected first basic keys *Bᵢ, Bⱼ,* ..., *Bₘ*, *Bₙ* via said first concatenating. This may be described by the following equation: *K_{P} = Bᵢ* ⊕ *Bⱼ* ⊕ ... ⊕ *Bₘ* ⊕ *Bₙ,* wherein ⊕ denotes the above discussed first concatenating operation. Thus, the receiving computer uses the same input and the same logical operation as the sending computer, so that the receiving computer generates exactly the same first key *K_{P}* as the sending computer. If the security key *S* is generated from at least one first random key *R₁* and/or at least one random key *R₂*, the receiving computer applies said second selection rule to said second set of basic keys *B_{R}* to select the second basic keys *Bᵣ, Bₛ,* ..., *Bᵥ, B_{w}* previously selected by the sending computer. The sending computer concatenates said selected second basic keys *Bᵣ, Bₛ,* ..., *Bᵥ, B_{w}* via the second concatenating operation to generate the at least one second generated key *K_{R},* the second concatenating operation may be described by the following equation: *K_{R} = Bᵣ* ⊕ *Bₛ* ⊕ ... ⊕ *Bᵥ* ⊕ *B_{w}*, wherein ⊕ denotes the second concatenating operation. Thus, the receiving computer uses the same input and the same logical operation as the sending computer, so that the receiving computer generates exactly the same first key *K_{R}* as the sending computer. Thus, the receiving computer recreates the step of selecting the second basic keys *Bᵣ, Bₛ,* ..., *Bᵥ, B_{w}* from the second selection rule and the step of generating the at least one second generated key *K_{R}* from these selected second basic keys *Bᵣ, Bₛ,* ..., *Bᵥ, B_{w}*. The second selection rule may be known to the receiving computer or the receiver or it may be transmitted to them in any number of ways already described above with regard to the first selection rule. When the receiving computer has generated the at least one second key *K_{R}* it may decrypt the second ciphertext *C_{R}* as explained above. Afterwards, the first ciphertext *C_{P}* may also be decrypted as explained above. The second set of basic keys *B_{R}* and the first set of basic keys *B_{P}* may be the same set of basic keys so that the first basic keys *Bᵢ, Bⱼ,* ..., *Bₘ*, *Bₙ* and the second basic keys *Bᵣ, Bₛ,* ..., *Bᵥ, B_{w}* may be selected from the same set of basic keys *B. B* or *B_{P}* and/or *B_{R}* may be generated from one or more master strings *B₀* as explained above.

According to a further embodiment of the invention the first and second generated keys *K_{P}* and *K_{R}* may be substituted by only one key *K*. The first and second ciphertexts *C_{P}* and *C_{R}* may then be generated by this one key *K* and the first and/or second random keys *R₁* and *R₂*. In particular, the key *K* may be generated from a number of basic *keys: K = Bᵢ* ⊕ *Bⱼ* ⊕ ... ⊕ *Bₘ* ⊕ *Bₙ.* The first ciphertext *C_{P}* may then be generated as follows: *C_{P}* = *P* ⊕ *K* ⊕ *R₁* ⊕ *R₂.* The second ciphertext *C_{R}* may be generated as *C_{R}* = *R₁* ⊕ *K*. Retrieval of the first random key *R₁* is done by the equation *R₁ = C_{R}* ⊕ *K* and the plaintext may be restored by *P* = *C_{P}* ⊕ *K* ⊕ *R₁* ⊕ *R₂.* However, this variation might be vulnerable to a known-plaintext attack. If the adequate logical operation is applied to the first ciphertext *C_{P}* and the second ciphertext *C_{R}*, the result is described by *C_{P}* ⊕ *C_{R}* = (*P* ⊕ *K* ⊕ *R₁* ⊕ *R₂*) ⊕ (*R₁* ⊕ *K*) *= P* ⊕ *R₂*. If the plaintext *P* is partially known, the corresponding bits of the second random key *R₂* can be determined. Depending on the computation rule, bits of the first random key *R₁* might be deducible from the second random key *R₂* and bits of the key *K* would then follow from *K* = *R₁* ⊕ *C_{R}*. If enough bits of key *K* are known, the full key *K* can be reconstructed. The first random key *R₁* would then follow from *R₁* = *C_{R}* ⊕ *K,* the second random key *R₂* from applying the computation rule, and finally the plaintext *P* from *P* = *C_{P}* ⊕ *K* ⊕ *R₁* ⊕ *R₂.* Thus, the computation rule would have to be such that bits of the first random key *R₁* are not easily deducible from bits of the second random key *R₂.*

According to a preferred embodiment the first concatenating operation ⊕ and/or the second concatenating operation ⊕ is a bitwise exclusive-or (XOR) operation or a bitwise exclusive-nor (XNOR) operation and/or the first logical operation ⊕ and/or the second logical operation ⊕ is a bitwise exclusive-or (XOR) operation or a bitwise exclusive-nor (XNOR) operation. The logical operation(s) and the concatenating operation(s) may thus be the same or different. The method may be implemented in computer software and hardware very easily, because modem computer architecture relies on the XOR and XNOR commands. Also, these commands are executed in a native machine operation very fast. Thus, it is particularly appropriate for a secure transmission of mass data such as audio and video signals as well as for secure telephone communication.

According to a preferred embodiment, the first generated key *K_{P}* and/or the second generated key *K_{R}* and/or the first random key *R₁* and/or the second random key *R₂* are binary strings of length s and/or the plaintext P is a binary string of length *a* ≤ s.

According to a preferred embodiment the computer implemented method further comprises the step of: The sending computer transmitting the first selection rule to the receiving computer. The first selection rule may be transmitted together with the first ciphertext *C_{P}* containing the encrypted plaintext *P* or separate from it. The first key *K_{P}* itself does not need to be transmitted to the receiver. Instead, only the first selection rule is transmitted to the receiver. The first selection rule may comprise much less information than the first key *K_{P}*, namely the information about the selected basic keys used for generating *K_{P}*. Therefore, the first selection rule may be of much smaller size than the first key *K_{P}*, which in general may be as large as the plaintext *P*.

According to a further embodiment the computer implemented method further comprises the steps of: The sending computer encoding the first selection rule in a first keyword *W_{P}* that is transmitted via a symmetric-key or an asymmetric-key cipher, for example, via RSA, and the receiving computer decoding the first keyword *W_{P}* to access the first selection rule. In this way the first selection rule may be transmitted in a secure manner. If an asymmetric-key encryption method is used, the sending computer may encrypt the first keyword *W_{P}* via the public key of the receiving computer. The receiving computer may then decrypt the transmitted first keyword *W_{P}* via its private key. The first selection rule comprises the information about the selected basic keys. As mentioned above, the selection rule may comprise the serial numbers or indices of the selected basic keys. Encoding the information about the g selected basic keys may lead to a binary keyword. The first keyword *W_{P}* resulting from encoding the first selection rule is securely transmitted to the receiver. *Provided k* or *l*, and *g* are properly chosen, the size of the data to be encrypted is manageable by an asymmetric-key cipher such that it can be transmitted to the receiver in one unsplit transmission. In the first method, with k = 256, for instance, the RSA cipher with a key size of 1024 bits can be used because the maximum RSA message size then is 117 bytes and the size of the keyword is 256 bits, which correspondents to 32 bytes. The receiving computer decrypts first keyword *W_{P}* via its private key and decodes the first selection rule from *W_{P}*, from which he learns the serial numbers or indices of the selected first set of basic keys.

According to a further embodiment of the invention the sending computer transmits the second selection rule to the receiving computer. According to a further embodiment the sending computer encodes the second selection rule in a second keyword *W_{R}* that is transmitted via a symmetric-key or an asymmetric-key encryption method, for example, via RSA, and the receiving computer decodes the second keyword *W_{R}* to access the second selection rule, from which he learns the serial numbers or indices of the selected second set of basic keys. This embodiment exhibits the same advantages as the transmission and encryption of the first selection rule as described above. Alternatively, the keywords *W_{P}* and *W_{R}* can be combined into a single keyword W, e.g. via any computational operation.

When the basic keys are generated by the first method, that is individually and independently from one another, and *g* is not limited to relatively small values, the following method of encoding the selection rules is advantageous. The keyword *W_{P}* and *W_{R}* are each binary strings of length *k.* The bits of *W_{P}* may be set to one at the positions *i, j,* ..., *m, n* and set to zero at all other positions. The bits of *W_{R}* are set to one at the positions *r, s*, ..., *v*, *w* and set to zero at all other positions. The serial numbers or indices of the respectively selected basic keys are thus encoded in the most compact form. If *k* = 256, for example, the size of one keyword is 256 bits, or 32 bytes, and the size of the combined keyword W is 64 bytes. Hence the RSA cipher with a key size of 1,024 bits can be used to transmit both keywords in one unsplit transmission given that the maximum RSA message size then is 117 bytes. When the basic keys are generated by the second method, that is by derivation from a master string *B*₀ of length *l*, the following method of encoding the selection rules is advantageous. Each of the respective pointer values *q₁, q₂,* ..., *q_{g}* belonging to a selected set of basic keys may be encoded as a binary string. The individual strings are appended to each other thus forming the keyword *W_{P}* or *W_{P}.* The binary strings representing the pointer values have a length *a* that depends on *l*, the length of master string *B*₀. More specifically, *a* is the logarithm of *l* to base 2. The keywords *W_{P}* and *W_{R}* are then each binary strings of length g·a. If *l* is chosen to be *l* = 2³² and g is set to *g* = 2 (reasonable choices with respect to security against brute-force attack, see above), for example, then *a* = long₂(*l*) = 32 and g·a = 2 · 32 = 64. Hence the size of one keyword is 64 bits, or 8 bytes, and the size of the combined keyword W is 16 bytes. Again, this is smaller than 117 bytes and both keywords can be transmitted to the receiver in one unsplit transmission. The latter method of encoding can also be advantageous when the basic keys are generated by the first method and *g* is limited to relatively small values.

According to a further embodiment of the invention the sending computer transmits the computation rule to the receiving computer. According to a further embodiment the sending computer encodes the computation rule in a third keyword *W_{T}* and transmits *W_{T}* via a symmetric-key or an asymmetric-key cipher, and the receiving computer decodes the third keyword *W_{T}* to access the computation rule.

According to an embodiment of the invention the first ciphertext *C_{P}* and the second ciphertext *C_{R}* are combined into one string *C* and/or the first keyword *W_{P}* and second keyword *W_{R}* are combined into one keyword *W*. The rule of combination can be as follows or similar: The bits of *C_{P}* may be consecutively represented by the odd-numbered bits, and the bits of *C_{R}* may be consecutively represented by the even-numbered bits, of the combined string *C* and transmitted as such (multiplexing). Corresponding bits of *C_{P}* and *C_{R}* may then be available at the receiver at virtually the same time. This is an advantage, in particular, when the data is streamed and to be continuously decrypted by the receiver. Likewise, the keywords *W_{P}* and *W_{R}* can be combined into a single keyword W, for instance, by appending *W_{R}* to *W_{P}*. The sender would then encrypt W, instead of *W_{P}* and *W_{R}*.

According to a further embodiment of the invention the first ciphertext *C_{P}* and/or the second ciphertext *C_{R}* and/or the encrypted first keyword *W_{P}* and/or the second encrypted keyword *W_{R}* and/or the encrypted combined keyword *W* may be combined into a single overall combined string *T. W_{P}* and/or *W_{R}* and/or W may be encrypted by an asymmetric-key or symmetric-key cipher before being combined into *T,* and the first bits of *T* possibly correspond to those of *W_{P}* and/or *W_{R}* and/or *W*, and the remaining bits of *T* possibly correspond to those of *C_{P}* and/or *C_{R}. T* may be transmitted to the receiver, who may decombine and decrypt, to the extent that they are used and have been generated, *W_{P}, W_{R}, W, C_{P},* and *C_{R}* from *T.*

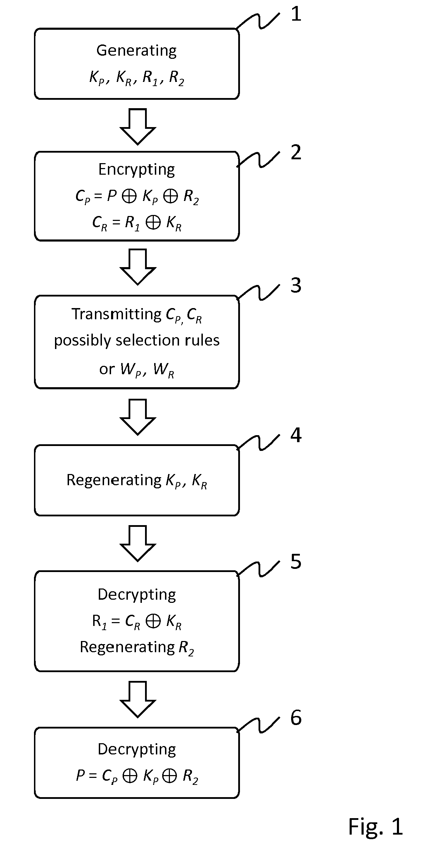

In the following an exemplary embodiment of the invention will be described with respect to Fig. 1. Fig. 1 shows an embodiment of the method according to the invention.

Fig. 1 shows a schematic diagram with the steps according to an embodiment of the invention. In step 1 the sending computer generates the at least one first generated key *K_{P}* by selecting a number of first basic keys *Bᵢ, Bⱼ,* ..., *Bₘ, Bₙ* from a set of basic keys *B* according to a first selection rule and concatenating said selected first basic keys *Bᵢ, Bⱼ,* ..., *Bₘ, Bₙ* via a first concatenating operation. Also, the sending computer generates at least one second generated key *K_{R}* by selecting a number of second basic keys *Bₙ Bₛ,* ..., *Bᵥ, B_{w}* from the set of basic keys *B* according to a second selection rule and concatenating said selected second basic keys *Bᵣ, Bₛ,* ..., *Bᵥ, B_{w}* via a second concatenating operation. Furthermore, the sending computer generates at least one first random key *R₁.* Also, he generates at least one second random key *R₂* from at least one first random key *R₁* and/or the at least one first generated key *K_{P}* and/or the at least one second generated key *K_{R}* by applying a computation rule to said at least one first random key *R₁* and/or said at least one first generated key *K_{P}* and/or said at least one second generated key *K_{R}.*

In step 2 the sending computer encrypts a plaintext *P* to create a first ciphertext *C_{P}* by concatenating the plaintext *P* with the at least one first generated key *K_{P}* and the at least one second random key *R₂* via at least one first logical operation. Thus, the at least one security key S is generated from at least one first generated key *K_{P}* and at least one second random key *R₂***.** The sending computer further encrypts the at least one first random key *R₁* by concatenating it with the at least one second generated key *K_{R}* to create a second ciphertext *C_{R}* via at least one second logical operation.

In step 3, the sending computer transmits, by a not necessarily secure method, the first ciphertext *C_{P}* and the second ciphertext *C_{R}* to a receiving computer. Also, the sending computer securely transmits the first selection rule and the second selection rule and/or the respective keywords to a receiving computer.

In step 4, the receiving computer regenerates the at least one first generated key *K_{P}* by selecting the number of first basic keys *Bᵢ, Bⱼ,* ..., *Bₘ, Bₙ* from the set of basic keys *B* according to the first selection rule and concatenating said selected first basic keys *Bᵢ, Bⱼ,* ..., *Bₘ, Bₙ* via the first concatenating operation. Also, the receiving computer regenerates the at least one second generated key *K_{R}* by selecting the number of second basic keys *Bᵣ, Bₛ,* ..., *Bᵥ, B_{w}* from the set of basic keys B according to the second selection rule and concatenating said selected second basic keys *Bᵣ Bₛ,* ..., *Bᵥ, B_{w}* via the second concatenating operation.

In step 5, the receiving computer decrypts the second ciphertext *C_{R}* with the at least one second generated key *K_{R}* to recreate the at least one first random key *R₁* by concatenating the second ciphertext *C_{R}* with the at least one second generated key *K_{R}* via the at least one second logical operation. Also, the receiving computer regenerates the at least one second random key *R₂* from at least one first random key *R₁* and/or the at least one first generated key *K_{P}* and/or the at least one second generated key *K_{R}* by applying a computation rule to said at least one first random key *R₁* and/or said at least one first generated key *K_{P}* and/or said at least one second generated key *K_{R}.*

In step 6, the receiving computer decrypts the first ciphertext *C_{P}* to recreate the plaintext P by concatenating the ciphertext *C_{P}* with the at least one first generated key *K_{P}* and the at least one second random key *R₂* via said at least one first logical operation.

It is noted that the operations in steps 1 to 6 can largely be performed simultaneously to the effect that the receiving computer can begin to recreate the plaintext P before the keys *K_{P}*, *K_{R}, R₁, R₂* have entirely been generated, the plaintext P has entirely been encrypted, and the ciphertexts *C_{P}* and *C_{R}* have entirely been transmitted by the sender.

## Claims

1. Computer implemented method for securely transmitting digital data by encryption and decryption using a sending computer and a receiving computer, the method comprising the steps of:
• The sending computer encrypts a plaintext *P* to create a first ciphertext *C_{P}* by concatenating the plaintext *P* with at least one security key *S* via at least one first logical operation, wherein the at least one security key *S* is generated from at least one first generated key *K_{P}* and/or at least one first random key *R₁* and/or at least one second random key *R₂,*
• The sending computer transmits the first ciphertext *C_{P}* to a receiving computer,
• The receiving computer decrypts the first ciphertext *C_{P}* to recreate the plaintext *P* by concatenating the first ciphertext *C_{P}* with the at least one security key S via said at least one first logical operation,
• Wherein, if the security key *S* is generated from at least one first generated key *K_{P}*, the sending computer generates the at least one first generated key *K_{P}* by selecting a number of first basic keys *Bᵢ, Bⱼ,* ..., *Bₘ, Bₙ* from a first set of basic keys *B_{P}* according to a first selection rule and concatenating said selected first basic keys *Bᵢ, Bⱼ,* ..., *Bₘ, Bₙ* via a first concatenating operation,
• Wherein, if the security key S is generated from at least one first random key *R₁* and/or at least one second random key *R₂,* the sending computer generates at least one second generated key *K_{R}* by selecting a number of second basic keys *Bᵣ Bₛ,* ..., *Bᵥ, B_{w}* from a second set of basic keys *B_{R}* according to a second selection rule and concatenating said selected second basic keys *Bᵣ, Bₛ,* ..., *Bᵥ, B_{w}* via a second concatenating operation, wherein the sending computer encrypts the at least one first random key *R₁* and/or the at least one second random key *R₂* to create a second ciphertext *C_{R}* by concatenating the at least one first random key *R₁* and/or the at least one second random key *R₂* with the at least one second generated key *K_{R}* via at least one second logical operation, wherein the sending computer transmits the second ciphertext *C_{R}* to the receiving computer, wherein the receiving computer decrypts the second ciphertext *C_{R}* by concatenating the second ciphertext *C_{R}* with the at least one second generated key *K_{R}* to recreate the at least one first random key *R₁* and/or the at least one second random key *R₂,*
• wherein the at least one second random key *R₂,* if used, is generated from the at least one first random key *R₁* and/or the at least one first generated key *K_{P}* and/or the at least one second generated key *K_{R}* by applying a computation rule to said at least one first random key *R₁* and/or said at least one first generated key *K_{P}* and/or said at least one second generated key *K_{R}.*

2. Computer implemented method according to claim 1, **characterized in that** the at least one security key S is generated from the at least one first generated key *K_{P}* and/or the at least one first random key *R₁* and/or the at least one second random *key R₂* by concatenating the at least one first generated key *K_{P}* and/or the at least one first random key *R₁* and/or the at least one second random key *R₂* via a logical operation, preferably the first logical operation.

3. Computer implemented method according to one of the preceding claims, wherein
• If the security key *S* is generated from at least one first generated key *K_{P}*, the receiving computer applies said first selection rule to said first set of basic keys *B_{P}* to select the first basic keys *Bᵢ, Bⱼ,* ..., *Bₘ, Bₙ* previously selected by the sending computer and concatenates said selected first basic keys *Bᵢ, Bⱼ,* ..., *Bₘ, Bₙ* via the first concatenating operation to generate the at least one first generated key *K_{P}*,
• If the security key S is generated from at least one first random key *R₁* and/or at least one second random key *R₂,* the receiving computer applies said second selection rule to said second set of basic keys *B_{R}* to select the second basic keys *Bᵣ Bₛ,* ..., *Bᵥ, B_{w}* previously selected by the sending computer and concatenates said selected second basic keys *Bᵣ, Bₛ,* ..., *Bᵥ, B_{w}* via the second concatenating operation to generate the at least one second generated key *K_{R}.*

4. Computer implemented method according to any of the preceding claims, further comprising the step of:
• The sending computer transmitting the first selection rule and/or the second selection rule to the receiving computer.

5. Computer implemented method according to claim 4, further comprising the steps of :
• The sending computer encoding the first selection rule in a first keyword *W_{P}* and/or the second selection rule in a second keyword *W_{R}* and/or the first and the second selection rules in a combined keyword *W* and securely transmitting *W_{P}* and/or *W_{R}* and/or *W* to the receiving computer by encryption and decryption with a symmetric-key or an asymmetric-key cipher, preferably RSA,
• The receiving computer decoding the first keyword *W_{P}* and/or the second keyword *W_{R}* and/or the combined keyword *W* to access the first selection rule and/or the second selection rule.

6. Computer implemented method according to any of the preceding claims, **characterized in that** the first ciphertext *C_{P}* and the second ciphertext *C_{R}* are combined into one string *C* and transmitted as such, preferably by multiplexing.

7. Computer implemented method according to any of the preceding claims, **characterized in that** the first ciphertext *C_{P}* and/or the second ciphertext *C_{R}* and/or the encrypted first keyword *W_{P}* and/or the encrypted second keyword *W_{R}* and/or the encrypted combined keyword W are combined into a single overall combined string *T* and transmitted as such.

8. Computer implemented method according to any of the preceding claims, **characterized in that** the first generated key *K_{P}* and/or the second generated key *K_{R}* and/or the first random key *R₁* and/or the second random key *R₂* are binary strings of length s and/or that the plaintext *P* is a binary string of length *l_{P}* ≤ s.

9. Computer implemented method according to any of the preceding claims, **characterized in that** the first concatenating operation and/or the second concatenating operation is a bitwise exclusive-or (XOR) operation or a bitwise exclusive-nor (XNOR) operation and/or the first logical operation and/or the second logical operation is a bitwise exclusive-or (XOR) operation or a bitwise exclusive-nor (XNOR) operation.

10. Computer implemented method according to any of the preceding claims, further comprising the step of:
• The sending computer transmitting the computation rule to the receiving computer.

11. Computer implemented method according to any of the preceding claims, **characterized in that** the first set of basic keys *B_{P}* and/or the second set of basic keys *B_{R}* is derived from a master string *B₀* of length *l*, wherein a basic key *B_{q}* is identified by a *pointer q* in the range 1 ≤ *q* < *l* and *B_{q}* is defined as the substring of *B₀* that commences at position *q* of *B₀,* wherein the number of first basic keys *Bᵢ, Bⱼ,* ..., *Bₘ, Bₙ* is selected by selecting the substrings of the respective pointers *i, j,* ..., *m, n* and the number of second basic keys *Bᵣ, Bₛ,* ..., *Bᵥ, B_{w}* is selected by selecting the substrings of the respective pointers *r, s,* ..., *v*, *w*.

12. Computer implemented method according to any of the preceding claims, **characterized in that** the computation rule is a transposition rule.

13. Computer implemented method according to claim 12, **characterized in that** the transposition rule by which the second random key *R*₂ is computed comprises setting the first bit of *R*₂ to the second or third bit of the first random key *R*₁, depending on whether the first bit of the first generated key *Kₚ* is zero or one, setting the second bit of *R*₂ to the third or fourth bit of *R*₁, depending on whether the second bit of *K_{P}* is zero or one, and so on, until setting the penultimate bit of *R*₂ to the last or first bit of *R*₁ depending on whether the penultimate bit of *K_{P}* is zero or one, and finally setting the last bit of *R*₂ to the first or second bit of *R*₁ depending on whether the last bit of *K_{P}* is zero or one, or in which *K_{P}* is replaced by a zero string, or in which *K_{P}* is replaced by *K_{R}* or a combination of *K_{P}* and *K_{R},* or in which *R*₁, *K_{P},* and *K_{R}* switch roles, or in which the position of a respective bit of *R*₂ and the positions of the bits of *R*₁, *K_{P}*, and *K_{R}* from which the respective bit of *R*₂ results are related.

14. A computer program product adapted for carrying out the computer implemented method according to any of the preceding claims.

15. A computer comprising a computer program product according to claim 14.

16. A system of a sending computer and a receiving computer adapted for carrying out the computer implemented method according to any of the preceding claims.
